# EUROPÄISCHE PATENTANMELDUNG

(11) **EP 0 945 214 A2**
(43) Veröffentlichungstag der Anmeldung: **29.09.1999**
(21) Anmeldenummer: 99105505.4
(22) Anmeldetag: 17.03.1999
(51) Int. Cl.: B23Q 11/00, B23Q 11/10

(54) **Spanende Bearbeitung von Magnesium**

(30) Priorität: 23.03.1998 DE 19812647
(71) Anmelder: Linde Aktiengesellschaft, 65189 Wiesbaden (DE)
(72) Erfinder: Danzer, Wolfgang, 84405 Dorfen (DE)

(57) **Zusammenfassung**

Die Erfindung betrifft ein Verfahren zur spanenden Bearbeitung von Magnesium (9) oder Magnesiumlegierungen in einer Inertgasatmosphäre, wobei während der Bearbeitung mit einem im wesentlichen aus Kohlendioxid und/oder Argon bestehenden Kühlmittel (4) gekühlt wird. Die bei der spanenden Bearbeitung entstehenden Magnesiumspäne werden zu wiederverwendbaren Magnesiumblöcken (10) verarbeitet.

## Beschreibung

Die Erfindung betrifft ein Verfahren zur spanenden Bearbeitung von Magnesium oder Magnesiumlegierungen in einer Inertgasatmosphäre, wobei während der Bearbeitung die Bearbeitungsstelle gekühlt wird.

Der Begriff spanende Bearbeitung bezieht sich auf alle Verfahren, bei denen von einem Werkstück mittels eines Werkzeugs Stoffteilchen auf mechanischen Wege abgetrennt werden, um bestimmte Werkstückformen, Werkstücktoleranzen und Oberflächengüten zu erreichen oder auch unerwünschte Werkstückoberflächenschichten zu entfernen. Beispiele derartiger Verfahren sind Drehen, Bohren, Fräsen, Hobeln, Räumen, Sägen, Feilen, Bürstspanen, Schaben, Schleifen, Honen, Läppen, Strahlspanen und Gleitspanen.

Es ist bekannt, daß sich Magnesium und Magnesiumlegierungen sehr gut zerspanen lassen. Der Leistungsbedarf und die aufzuwendenden Schnittkräfte sind relativ niedrig, so daß hohe Schnittgeschwindigkeiten erreicht werden können. Bei der spanenden Bearbeitung von Magnesium existieren jedoch verschiedene Gefahrenpotentiale. Insbesondere bei der Trockenbearbeitung erhitzt sich Magnesium leicht über die Entzündungstemperatur. Von kleinen Magnesiumspänen und Magnesiumstäuben geht aufgrund ihrer leichten Entflammbarkeit eine große Brand- und Explosionsgefahr aus. Bei der Verarbeitung mit einem Öl / Wassergemisch, der sogenannten Emulsionsbearbeitung, kann Magnesium mit dem Wasser unter Bildung von Wasserstoff reagieren, wodurch gefährliches Knallgas entsteht. Bei der Magnesiumbearbeitung unter Öl kann es insbesondere bei der Hochgeschwindigkeitsbearbeitung zu Öl- und Ölnebelbränden kommen. Bei der Emulsion- und Ölbearbeitung ist zudem die Späneaufbearbeitung sehr problematisch.

Aus der US 5,645,382 ist ein Verfahren zur Bearbeitung eines Werkstück aus Magnesium bekannt, bei dem das Werkstück in ein Gehäuse eingebracht wird, das Gehäuse evakuiert und mit gasförmigem Stickstoff geflutet wird und die Bearbeitung des Werkstück in dieser Stickstoffatmosphäre vollzogen wird. Nachteilig an diesem Verfahren ist die geringe Kühlwirkung des gasförmigen Stickstoffs, wodurch die Bearbeitungsgeschwindigkeit begrenzt wird.

Aufgabe vorliegender Erfindung ist es daher ein Verfahren der eingangs genannten Art bereitzustellen, mit dem Magnesium leicht und gefahrlos bearbeitet werden kann.

Diese Aufgabe wird erfindungsgemäß dadurch gelöst, daß ein im wesentlichen aus Kohlendioxid und / oder Argon bestehendes Kühlmittel der Bearbeitungsstelle zugeführt wird und daß die bei der spanenden Bearbeitung entstehenden Magnesiumspäne zu wiederverwendbaren Magnesiumblöcken verarbeitet werden.

Es hat sich gezeigt, daß bei der erfindungsgemäßen Zuführung von Kohlendioxid an die Bearbeitungsstelle die oben genannten Gefahrenpotentiale völlig vermieden werden und dennoch eine hohe Bearbeitungsgeschwindigkeit erreicht wird. Das erfindungsgemäße Verfahren hat den Vorteil, daß die anfallenden Magnesiumspäne sehr leicht aufgearbeitet bzw. wiederverwertet werden können. Bei den bisherigen Naßverfahren sind diese nur durch aufwendige Reinigungsverfahren wieder benutzbar.

Vorzugsweise wird die Bearbeitungsstelle mit Kohlendioxid-Schnee gekühlt. Hierzu wird flüssiges Kohlendioxid in der Nähe der Bearbeitungsstelle entspannt, wodurch ein Kohlendioxidgas/Schnee-Gemisch entsteht, welches direkt an die Bearbeitungsstelle geblasen wird. Der Kohlendioxidschnee lagert sich an der Bearbeitungsstelle ab und entzieht dem Werkstück sowie dem Werkzeug die bei der spanenden Bearbeitung anfallende Wärme. Beim Bohren von Magnesium oder Magnesiumlegierungen sorgt die dabei auftretende Gasströmung dafür, daß die Bearbeitungsstelle von Magnesiumspänen und Magnesiumstaub befreit wird. Die Bearbeitungsstelle ist so immer frei, um weiteren Kohlendioxidschnee zur Kühlung abzulagem. Das bei der Entspannung des flüssigen Kohlendioxids entstehende Kohlendioxidgas kann auch in sehr enge Löcher und schmale Schnitte eindringen und dort die nötige Kälte liefern. Bei manchen Anwendungen kann es daher auch von Vorteil sein, überwiegend Kohlendioxidkaltgas der Bearbeitungsstelle zuzuführen.

Die oben genannte Aufgabe kann auch dadurch gelöst werden, daß der Bearbeitungsstelle im wesentlichen ein aus Argonkaltgas bestehendes Kühlmittel zugeführt wird. Dies hat im Vergleich mit Kohlendioxid den zusätzlichen Vorteil, daß Argon gegenüber Magnesium absolut inert ist. Chemische Reaktionen zwischen den Magnesiumspänen bzw. dem Magnesiumstaub und dem Kühlmittel werden so sicher vermieden.

Vorzugsweise wird das Kühlmittel kontiuierlich der Bearbeitungsstelle zugeführt, um eine gleichmäßige Kühlung des zu bearbeitenden Werkstücks sicher zu stellen. Durch den kontinuierlichen Kühlgasstrom von Kohlendioxid oder Argon wird die Inertgasatmosphäre an der Bearbeitungsstelle ständig erneuert, so daß es nicht zu gefährlichen Anreicherungen von Magnesiumstaub kommt. Von Vorteil ist weiterhin ein Abzug, beispielsweise in Form einer Pumpe oder eines Ventilators, vorgesehen, mit dem das mit Magnesiumstaub angereicherte Inertgas von der Bearbeitungsstelle abgesaugt wird. Magnesiumstaubexplosionen bei der Bearbeitung werden dadurch ausgeschlossen.

Von Vorteil wird die Bearbeitung innerhalb eines gegen die Umgebung abgeschirmten Volumens durchgeführt. So werden Verunreinigungen der Umgebung durch Magnesium- bzw. Magnesiumoxidstaub ausgeschlossen.

Eine nahezu hundertprozentige Wiederverwertung des Magnesiums kann dadurch erreicht werden, daß der bei der spanenden Bearbeitung anfallende Magnesiumstaub aus der Inertgasatmosphäre gefiltert wird. Der aus dem Filter abgeschöpfte Magnesiumstaub kann anschließend beispielsweise wieder dem Schmelzofen zugeführt werden.

Von Vorteil werden die Magnesiumblöcke, die in der Regel durch Pressen der Magnesiumspäne hergestellt werden, einem Schmelzofen zugeführt.

Es hat sich ebenfalls als günstig erwiesen, die Magnesiumbearbeitung bei einem leichten Vakuum durchzuführen. Auf diese Weise entweicht der bei der Bearbeitung entstehende Magnesiumstaub nicht an die Umgebung, sondern verbleibt aufgrund des Unterdrucks an der Bearbeitungsstelle.

Es hat sich als günstig erwiesen, das gefilterte Inertgas im Kreis zu führen und wieder der Bearbeitungsstelle zuzuleiten. Dadurch kann der Gasverbrauch deutlich gesenkt werden. Die Kühlung erfolgt in diesem Fall durch das zusätzlich zu dem im Kreislauf geführten Gas eingeblasene Inertgas. Von Vorteil wird bei dieser Variante ein geringer Überdruck in dem System aufrechterhalten.

Die Zuführung des Inertgases an die Bearbeitungsstelle erfolgt vorzugsweise durch das das Magnesium bearbeitende Werkzeug. Hierzu kann in dem Werkzeug eine Zuführungsleitung vorgesehen werden. Das Inertgas wird dadurch direkt an die Bearbeitungsstelle geführt, so daß eine optimale Kühlung und Inertisierung der Bearbeitungsstelle erreicht wird.

Die Erfindung hat gegenüber den bekannten Verfahren den Vorteil, daß die eingangs erwähnten Gefahrenpotentiale völlig vermieden werden. Insbesondere bei der Verwendung von Kohlendioxidschnee als Kühlmittel wird die bei der spanenden Bearbeitung entstehende Wärme sehr effektiv abgeführt. Beim Einsatz von gasförmigem Kühlmittel kann auch an schwer zugängliche Bearbeitungsstellen Kälte zugeführt werden. Die Verwendung von Kohlendioxid als Kühlmittel hat gegenüber anderen kryogenen Kühlmitteln den Vorteil, daß das Kühlmittel keine negativen Auswirkungen auf das zu bearbeitende Werkstück hat.

Bei sehr kalten Kühlmitteln, wie z. B. flüssigem Stickstoff, besteht dagegen zu Anfang die Gefahr der Versprödung oder anderer Schädigungen des Werkstücks. Danach bildet sich an der Oberfläche des flüssigen Stickstoffs aufgrund des Leidenfrostschen Phänomens eine dünne isolierende Gasschicht, so daß das Werkstück dann nicht mehr ausreichend gekühlt wird. Eine gleichmäßige, werkstoffschonende Kühlung ist somit nicht möglich.

Die Erfindung sowie weitere vorteilhafte Einzelheiten der Erfindung werden im folgenden anhand des in der schematischen Zeichnung dargestellten Ausführungsbeispiels näher erläutert.

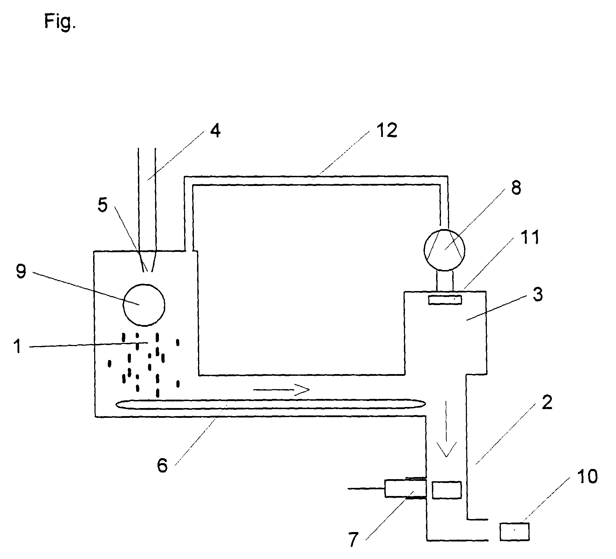

Die in der einzigen Figur dargestellte Zerspanstation besteht aus dem eigentlichen Zerspanbereich 1, der mit einer Entsorgungseinrichtung 2 für Magnesiumspäne und einer Entsorgungseinrichtung 3 für Magnesiumstaub verbunden ist. Das zu bearbeitende Werkstück 9 aus Magnesium wird in den gegen die Umgebung abgeschlossenen Zerspanbereich 1 eingebracht und mit dem Zerspanwerkzeug, z. B. einer Fräse, bearbeitet. Während der Bearbeitung wird über die Zuleitung 4 flüssiges Kohlendioxid in den Zerspanbereich 1 geleitet und in der Entspannungsdüse 5 am Ende der Zuleitung 4 entspannt. Dabei entsteht ein Gemisch aus Kohlendioxidgas und Kohlendioxidschnee. Die Entspannungsdüse 5 ist dabei direkt auf die Bearbeitungsstelle 9 gerichtet, so daß sich der bei der Entspannung entstehende Kohlendioxidschnee unmittelbar auf der Bearbeitungsstelle 9 ablagert. Auf diese Weise wird die beim Zerspanen anfallende Wärme effektiv abgeführt. Das bei der Entspannung des flüssigen Kohlendioxids entstehende Kohlendioxidgas bildet eine Inertgasatmosphäre im Zerspanbereich 1.

Die beim Zerspanen anfallenden Magnesiumspäne fallen im Zerspanbereich 1 nach unten und treffen auf eine Fördereinrichtung 6 auf, mit der sie aus dem Zerspanbereich 1 abtransportiert und einer Entsorgungseinrichtung 2 für die Magnesiumspäne zugeführt werden. Die Magnesiumspäne fallen von der Fördereinrichtung 6 in eine Presse 7, in der die Magnesiumspäne zu Magnesiumbriketts 10 gepreßt werden. Die Magnesiumbriketts 10 können anschließend gefahrlos aus der Presse 7 entnommen und beispielsweise in einen Schmelzofen zurückgegeben werden.

In der Zerspanstation 1 anfallender Magnesiumstaub wird in der Entsorgungseinrichtung 3 mittels eines Abluftgebläses 8 abgezogen und in Filtern 11 aufgefangen. Der Staub kann dann ohne Explosionsgefahr recyclet werden. Eine Verunreinigung der Umgebung der Zerspanstation 1durch feinsten Magnesiumstaub tritt nicht auf. Durch die Erfindung wird so eine gefahrlose Bearbeitung von Magnesium gewährleistet, bei der ein hundertprozentiges Recycling des Magnesiumsabfalls möglich ist.

Das gefilterte Kohlendioxidgas wird anschließend über Leitung 12 wieder in den Zerspanbereich 1 zurückgepumpt. Der Kohlendioxidverbrauch kann so drastisch reduziert werden. Die bei der Kreislaufführung des Kohlendioxids unweigerlich auftretenden Kohlendioxidverluste werden durch über Leitung 4 neu zugeführtes Kohlendioxid ausgeglichen. Dieses neu zugeführte Gas sorgt zudem für eine ausreichende Kühlung der Bearbeitungsstelle 9.

## Patentansprüche

1. Verfahren zur spanenden Bearbeitung von Magnesium oder Magnesiumlegierungen in einer Inertgasatmosphäre, wobei während der Bearbeitung die Bearbeitungsstelle gekühlt wird, **dadurch gekennzeichnet**, daß ein im wesentlichen aus Kohlendioxid und/oder Argon bestehendes Kühlmittel (4) der Bearbeitungsstelle (9) zugeführt wird und daß die bei der spanenden Bearbeitung entstehenden Magnesiumspäne zu wiederverwendbaren Magnesiumblöcken (10) verarbeitet werden.

2. Verfahren nach Anspruch 1, dadurch gekennzeichnet, daß ein im wesentlichen aus Kohlendioxid-Schnee bestehendes Kühlmittel (4) der Bearbeitungsstelle (9) zugeführt wird.

3. Verfahren nach Anspruch 1, dadurch gekennzeichnet, daß ein im wesentlichen aus Kohlendioxid-Kaltgas bestehendes Kühlmittel (4) der Bearbeitungsstelle (9) zugeführt wird.

4. Verfahren nach Anspruch 1, dadurch gekennzeichnet, daß ein im wesentlichen aus Argon-Kaltgas bestehendes Kühlmittel (4) der Bearbeitungsstelle (9) zugeführt wird.

5. Verfahren nach einem der Ansprüche 1 bis 4, dadurch gekennzeichnet, daß das Kühlmittel (4) kontinuierlich zugeführt wird.

6. Verfahren nach einem der Ansprüche 1 bis 5, dadurch gekennzeichnet, daß die Bearbeitung innerhalb eines geschlossenen Gehäuses erfolgt.

7. Verfahren nach einem der Ansprüche 1 bis 6, dadurch gekennzeichnet, daß der bei der spanenden Bearbeitung entstehende Magnesiumstaub aus der Inertgasatmosphäre gefiltert wird (11).

8. Verfahren nach einem der Ansprüche 1 bis 7, dadurch gekennzeichnet, daß die Magnesiumblöcke (10) einem Schmelzofen zugeführt werden.

9. Verfahren nach einem der Ansprüche 1 bis 8, dadurch gekennzeichnet, daß die Bearbeitung bei Unterdruck erfolgt.

10. Verfahren nach einem der Ansprüche 7 oder 8, dadurch gekennzeichnet, daß das gefilterte Inertgas wieder der Bearbeitungsstelle (9) zugeführt wird.

11. Verfahren nach Anspruch 10, dadurch gekennzeichnet, daß die Bearbeitung bei geringem Überdruck erfolgt.

12. Verfahren nach einem der Ansprüche 1 bis 11, dadurch gekennzeichnet, daß das Magnesium mittels eines Werkzeugs bearbeitet wird und das Inertgas durch eine Zuleitung in dem Werkzeug der Bearbeitungsstelle (9) zugeführt wird.
